# EUROPEAN PATENT APPLICATION

(11) **EP 4 817 816 A1**
(43) Date of publication of application: **07.10.2026**
(21) Application number: 25168056.7
(22) Date of filing: 02.04.2025
(51) Int. Cl.: B25J 13/08, B25J 15/00, B25J 17/00, B25J 19/02

(54) **SENSING OF JOINT DISLOCATION IN ROBOTIC HANDS**

(71) Applicant: mimic robotics AG, 8092 Zurich (CH)
(72) Inventor: Weirich, Stefan, Schlieren (CH); Gravert, Stephan-Daniel, Zurich (CH); Bieri, Nathalie, Zurich (CH)
(74) Representative: SSM Sandmair

(57) **Abstract**

A finger joint assembly for a robotic hand includes a first and second phalanx connected by a dislocatable joint. The assembly includes sensor means to determine the position of the joint and detect when it is dislocated, enabling the robotic hand to maintain proper alignment and function.

## Description

### TECHNICAL FIELD

This disclosure relates generally to the field of robotics, and more specifically to dexterous robotic hands, particularly those designed for complex manipulation tasks requiring precise control and force application.

### BACKGROUND

Robotic hands and articulated manipulators often operate in unstructured or dynamic environments, where external forces and impacts can cause damages to the robot or harm to humans. To ensure continued functionality and durability, it is desirable for such systems to incorporate compliant mechanisms that can absorb impact by elastic deformation or joint dislocations. For these systems to work with precision and reliability it is desirable to incorporate mechanisms that can either passively or actively correct joint dislocations as well as sensors capable of detecting and quantifying such events. However, the current state of the art shows various limitations in both correction and sensing capabilities.

Several robotic hand designs have introduced passive correction mechanisms that rely on elastic or compliant structures to absorb external shocks and enable limited dislocation tolerance. For example, the FLLEX Hand employs flexible ligament-like structures to counteract dislocating forces (see Y. -J. Kim, et al. "Fluid Lubricated Dexterous Finger Mechanism for Human-Like Impact Absorbing Capability," in IEEE Robotics and Automation Letters, vol. 4, no. 4, pp. 3971-3978, Oct. 2019).

While some work has been done on sensing mechanisms for joint monitoring, these are often focused on general movement tracking rather than detecting and responding to dislocations. For example, robotic sensing mechanisms have been explored for multiple applications in ACS Nano 2023, 17, 16, 15277-15307.

Accordingly, there remains a need for a robotic joint system that not only tolerates and passively accommodates dislocations but also actively senses and corrects them, particularly in compact, dexterous robotic hands where space and resilience are critical.

It is therefore an objective of the present disclosure to provide improved robotic joint mechanisms that enable both the detection and correction of joint dislocations, particularly in compact and dexterous robotic hands, thereby overcoming the drawbacks of the prior art at least in part.

### SUMMARY OF THE DISCLOSURE

The above and other objectives may be achieved by the subject-matter defined in the independent claims. Advantageous modifications of embodiments of the present disclosure are defined in the dependent claims as well as in the description and the drawings.

One aspect of the present disclosure relates to a finger joint assembly for a robotic hand or robotic manipulator. The finger joint assembly may comprise a first phalanx and a second phalanx. The first phalanx and the second phalanx may be coupled by a joint, in particular a dislocatable joint. The term "Dislocatable", when used with reference to a dislocatable joint, may be understood to refer to a joint that is configured to intentionally permit temporary separation or disengagement of the two connected components, typically two phalanges of the finger, from their nominal kinematic relationship under specific conditions, such as the application of an external force exceeding a defined threshold. A dislocatable joint is designed such that the phalanges can disengage or shift from their original position, i.e., become "dislocated", without sustaining permanent damage, and may subsequently reposition or re-engage themselves either passively (e.g., via spring forces or gravity) or actively (e.g., through actuation or user intervention).

In the context of robotic systems, such as a robotic hand or finger mechanism, a dislocatable joint may provide mechanical compliance, shock absorption, or fail-safe behavior by allowing relative displacement or deformation in response to unexpected collisions, excessive loads, or alignment errors. This improves the robustness and resilience of the system, particularly in unstructured or human-interactive environments.

A dislocatable joint may be implemented using mechanical features such as detents, snap-fit couplings, over-center linkages, magnetic latching, or compliant flexures that allow for controlled disengagement and re-engagement.

It may be provided that the finger joint assembly comprises sensor means configured to determine a position of the joint and to detect when the joint is dislocated.

Sensing the position of the joint and when the joint is dislocated may significantly improve the reliability and functionality of the robotic hand. This may be beneficial for ensuring precise control and coordination of the hand's movements, which is needed for tasks requiring dexterity and fine motor skills. Additionally, the ability to detect joint dislocation may help in preventing damage to the robotic hand by enabling timely corrective actions. This may result in increased durability and longevity of the robotic hand, making it more suitable for various applications, including industrial automation, medical prosthetics, and service robotics, or the like.

It may be provided that the same sensor is used to detect dislocation and to sense joint position. This results in a particularly simple hardware setup, in that the same sensor fulfils multiple functions without the need for additional components.

It may be provided that the sensor means comprises at least one hall effect sensor. The at least one hall effect sensor may be configured to detect changes in a magnetic field when the joint is dislocated, i.e. indicating joint dislocation.

Hall effect sensors provide high precision in detecting changes in magnetic fields, which can be beneficial for accurately determining the position of the joint, i.e., the position of the first phalanx and the second phalanx relative to each other and detecting dislocations of one phalanx relative to the other phalanx. This can enhance the reliability of the robotic hand's movement and positioning, ensuring that the robotic hand can, based on the sensor data, be operated smoothly and efficiently even if collisions occur resulting in temporary dislocations.

The use of hall effect sensors is a non-contact method of sensing, which may reduce wear and tear on the components and increase the overall durability of the finger joint assembly. Additionally, hall effect sensors may be advantageous in environments where other types of sensors might be affected by external factors such as dust, moisture, or temperature variations. This robustness may make the finger joint assembly more versatile and suitable for a wide range of applications, including those in harsh or demanding conditions.

It may be provided that the at least one hall effect sensor is positioned on-axis or off-axis with respect to a magnet attached to the joint. The hall effect sensor may be attached to the first phalanx, to the second phalanx, or both.

The positioning of the hall effect sensor on-axis or off-axis with respect to a magnet attached to the joint may offer several technical advantages for the finger joint assembly. By allowing flexibility in sensor placement, this feature can enable optimized detection of magnetic field changes, enhancing the accuracy of joint position and dislocation detection. On-axis positioning may provide direct and precise readings, while off-axis positioning may offer a broader detection range, accommodating various joint configurations and movements

It may be provided that the sensor means comprises at least one inertial measurement unit. The at least on inertial measurement unit may be configured to detect angular offsets when the joint is dislocated, i.e., indicating joint dislocation. A first inertial measurement unit may be placed on the first phalanx and a second inertial measurement unit may be placed on the second phalanx of the joint to detect movement outside an intended rotation axis or other types of joint dislocation.

The incorporation of at least one inertial measurement unit (IMU) in the sensor means may offer several technical advantages for the finger joint assembly. IMUs can detect angular offsets, which can be beneficial for identifying joint dislocations with high precision. This feature can enhance the overall accuracy and responsiveness of the robotic hand, ensuring that any unintended movements or dislocations are promptly detected and handled.

The use of IMUs can also contribute to the robustness of the finger joint assembly, as these sensors are typically resistant to external disturbances such as vibrations and shocks. This can make the assembly more reliable and durable, suitable for applications in dynamic and challenging environments.

It may be provided that the sensor means is configured to measure or otherwise determine a torque, such as a torque acting about an axis corresponding to at least one movement plane of the joint.

Measuring or otherwise determining torque can provide valuable information about the forces acting on the joint, which can be beneficial for optimizing the control and stability of the robotic hand. This can enhance the overall precision of the hand's movements, ensuring that it can perform tasks requiring fine motor skills with greater accuracy.

The sensor means may comprise at least one torque sensor. This way, the torque may be measured in the actuated movement plane by the torque sensor, which may be arranged on a motor. The torque may also be determined from the motor current itself. Furthermore, outside of the actuated movement plane, the torque and/or force applied may be calculated from the position and/or angle of dislocation measured by the at least one hall effect sensor and/or the at least one inertial measurement unit, knowing the system characteristics, such as the elasticity of the dislocatable joint.

An estimated engagement point and/or an estimated direction of external forces may be determined at least based on the measured or determined torque or based on a different sensor measurement. This can further improve the functionality of the finger joint assembly. By analyzing these parameters, the system may be able to predict and respond to external influences more effectively, enhancing the hand's adaptability to various tasks and environments. This capability can be particularly advantageous in applications where the robotic hand interacts with complex or unpredictable objects, such as in medical prosthetics or service robotics.

It may be provided that the sensor means comprises at least one tactile sensor. The at least one tactile sensor may be configured to approximate an engagement point of an acting force.

A tactile sensor configured to approximate an engagement point of an acting force may provide valuable information about the interaction between the robotic hand and external objects. This feature may be beneficial for enhancing the hand's ability to perform tasks that require precise manipulation and handling.

The tactile sensor may be a force sensing resistor configured to measure normal forces at specific points of the joint and/or the first phalanx and/or the second phalanx. The optional use of a force sensing resistor (FSR) as the tactile sensor may further improve the accuracy and reliability of force measurements. FSRs are known for their sensitivity to normal forces, which may be advantageous for detecting and quantifying the pressure applied at specific points of the joint, first phalanx, and/or second phalanx. This capability may enable the robotic hand to adjust its grip and movements dynamically, ensuring optimal performance in various applications, such as industrial automation, medical prosthetics, and service robotics. Additionally, the integration of tactile sensors may contribute to the robustness and durability of the finger joint assembly, as it may help in preventing damage by detecting excessive forces and enabling timely corrective actions

It may be provided that the dislocatable joint allows movement around at least one rotation axis and is dislocatable when moved around one or more other axis and/or is dislocatable when moved in one or more linear directions.

The dislocatable nature of the joint when moved in different directions may offer a safety mechanism that can prevent damage from excessive force or misalignment. This capability may be advantageous in applications where the robotic hand interacts with complex or unpredictable objects, as it may allow the hand to absorb and adapt to external forces without compromising its structural integrity. Additionally, the versatility in movement may contribute to the overall robustness and durability of the finger joint assembly, making it suitable for various environments and applications, including industrial automation, medical prosthetics, service robotics, and the like.

It may be provided that the dislocatable joint comprises at least one elastic element configured to maintain the joint in a default engaged position.

An elastic element configured to maintain the joint in a default engaged position can provide stability and reliability to the robotic hand's movements. This feature may be beneficial for ensuring that the joint returns to its intended position after being dislocated, enhancing the overall precision and control of the hand.

The at least one elastic element may include one or more of a flexible ligament string, a rubber structure, and/or a spring. The optional use of flexible ligament strings, rubber structures, or springs as the elastic element may further improve the functionality and adaptability of the joint. These materials can provide resilience and an ability to absorb and dissipate forces, which can be advantageous for preventing damage and wear on the joint components. The elastic element may also contribute to the smooth operation of the finger joint assembly, allowing for fluid and natural movements that mimic human hand motions.

It may be provided that the finger joint assembly comprises a correction mechanism. The correction mechanism may be configured to return the joint to its default position upon the joint being dislocated.

A correction mechanism configured to return the joint to its default position upon dislocation can provide enhanced stability and reliability to the robotic hand. This feature may be beneficial for ensuring that the joint can automatically correct itself after being displaced, reducing the need for manual intervention and maintenance. The ability to self-correct may significantly improve the operational efficiency of the robotic hand, allowing it to perform tasks continuously without interruptions due to joint dislocations.

Additionally, the correction mechanism may contribute to the overall durability and robustness of the finger joint assembly, as it may help prevent damage and wear caused by misalignment or excessive force. This capability may be particularly advantageous in applications where the robotic hand interacts with complex or unpredictable objects, such as in industrial automation or medical prosthetics.

It may be provided that the correction mechanism comprises a form-fit calibration unit. The form-fit calibration unit may be configured to align the first phalanx and the second phalanx relative to each other based on a form-fit when the joint is returned in its default position. Optionally, the form-fit calibration unit may include a first part provided on the first phalanx and a second part provided at the second phalanx such that the first part and second part at least partially build a form-fit.

The form-fit calibration unit configured to align the first phalanx and the second phalanx relative to each other based on a form-fit when the joint is returned to its default position, may provide enhanced precision and stability to the robotic hand. The form-fit calibration may be beneficial for ensuring that the phalanxes are accurately aligned, reducing the risk of misalignment and improving the overall functionality of the joint.

It may be provided that the correction mechanism comprises a motor control system configured to adjust the position of the joint based on sensor data including at least sensor data obtained by the sensor means.

The motor control system may be beneficial for ensuring that the joint can be accurately and efficiently returned to its default position after dislocation, based on real-time data. This feature may significantly improve the operational efficiency of the robotic hand, allowing it to perform tasks continuously and reliably without interruptions due to joint misalignment. The use of sensor data to guide the motor control system may enhance the accuracy of the corrections, ensuring optimal alignment and functionality of the joint.

It may be provided that the correction mechanism includes the elastic element described above.

This may be beneficial for ensuring that the joint can be automatically returned to its default position after dislocation, utilizing the resilience and flexibility of the elastic element. The elastic element, which may include flexible ligament strings, rubber structures, or springs, may enhance the precision and efficiency of the correction process, allowing the joint to absorb and dissipate forces effectively. This capability may contribute to the smooth operation of the finger joint assembly, ensuring fluid and natural movements that mimic human hand motions.

Another aspect of the present disclosure relates to a system. The system may comprise a finger joint assembly according to any of the aspects described above. The system may comprise a data processing device. The data processing device may be configured to receive sensor data obtained by the sensor means.

The data processing device configured to receive sensor data obtained by the sensor means can provide enhanced control and monitoring capabilities for the robotic hand. This integration may be beneficial for processing and analyzing real-time data, allowing for precise adjustments and responses to joint dislocations.

It may be provided that the sensor means includes a plurality of sensors. The data processing device may be configured to perform sensor fusion for enhancing the precision of detecting a dislocation of the joint. Optionally, sensor fusion may include combining and preferably cross-validating sensor data obtained from the plurality of sensors.

The inclusion of a plurality of sensors within the sensor means may further improve the system's functionality. By performing sensor fusion, the data processing device may enhance the precision of detecting joint dislocations, combining and cross-validating data from multiple sensors to ensure accurate and reliable results. This feature may significantly improve the operational efficiency and reliability of the robotic hand, allowing it to perform tasks continuously and effectively. Sensor fusion may also contribute to the robustness of the system, as it may help mitigate errors and inconsistencies in sensor data, providing a comprehensive understanding of the joint's behavior.

Another aspect of the present disclosure relates to a robotic hand. The robotic hand may comprise at least one, preferably a plurality of, finger joint assemblies as described throughout this disclosure.

Utilizing multiple finger joint assemblies may provide enhanced dexterity and flexibility to the robotic hand. This feature may be beneficial for performing complex tasks that require precise and coordinated movements, mimicking the functionality of a human hand.

Another aspect of the present disclosure relates to the use of a finger joint assembly as described throughout this disclosure in a robotic hand.

The terms used herein should generally be construed as understood by the average person skilled in the art, unless explicitly indicated otherwise. The following explanations may guide the understanding:
The term "Finger joint assembly", or simply "finger joint", may be understood to refer to an articulating connection between two segments (or phalanges) of a finger of a robotic hand. A finger joint assembly enables relative motion between adjacent segments, thereby allowing the finger to bend, extend, or rotate in a controlled manner. The joint may be configured to support one or more degrees of freedom, including flexion/extension (such as rotational motion typically around the X-axis, allowing the finger to bend and straighten), abduction/adduction (such as side-to-side movement, typically around the Z-axis, allowing fingers to spread apart or come together), and/or axial rotation (such as rotational motion around the longitudinal Y-axis, enabling the finger to twist or rotate), depending on the mechanical design and intended functionality of the robotic hand. A finger joint may be implemented using one or more of the following mechanisms: pin joints (allowing rotation around a single axis; 1 DoF), hinge joints (a specific type of pin joint, used to allow flexion/extension motion), ball-and-socket joints (also referred to as spherical joint; allows rotation around all three axes; 3 rotational DoF), universal joint (also referred to as cardan joint; allows rotation about two perpendicular axes; 2 DoF), planar joint (also referred to as sliding joint or prismatic joint; allows linear motion along one axis; 1 translational DoF), compliant joint (also referred to as flexure-based joint; achieves motion via material deformation rather than discrete pivot points). The motion of each finger joint in a robotic hand may be controlled or coordinated independently of other joints to enable complex finger movements, including grasping, pinching, or in-hand manipulation.

The term "Hall effect sensor" may be understood to refer to an electromagnetic sensing device configured to detect the presence, magnitude, or change of a magnetic field based on the Hall effect principle. When a current flows through a conductive or semiconductive material and a magnetic field is applied perpendicular to the current flow, a voltage, known as the Hall voltage, is generated transverse to the direction of the current. This voltage is proportional to the strength of the applied magnetic field and is used as the output signal of the sensor.

A Hall effect sensor may be implemented as a digital or analog sensor, and may be used to detect:
- The position, proximity, or movement of a magnetic object.
- The rotational angle or speed of a shaft or joint equipped with a magnet.
- The direction or polarity of a magnetic field.

In the robotic hand of certain aspects of this disclosure, Hall effect sensors may be used for non-contact position sensing, where a magnet is affixed to a moving component (e.g., a rotating joint or translating element), and the sensor is fixed in place to detect the relative movement. This configuration enables compact, low-friction, and wear-resistant measurement of joint angles or dislocations, and may be advantageous in space-constrained or sensitive applications.

The term "Inertial measurement unit" (IMU) may be understood to refer to an electronic sensing device configured to measure and report data related to the motion and orientation of an object, typically in three-dimensional space. An IMU may comprise one or more combinations of the following sensor types:
- Accelerometers, for measuring linear acceleration along one or more axes.
- Gyroscopes, for measuring angular velocity or rate of rotation around one or more axes.
- Magnetometers (optional), for detecting the direction and magnitude of the Earth's magnetic field, thereby aiding in orientation or heading estimation.

An IMU may provide raw sensor data or processed information such as estimates of position, velocity, orientation (e.g., roll, pitch, and yaw), and/or joint angles, depending on the use case and the presence of onboard processing algorithms (e.g., sensor fusion, Kalman filtering).

In the context of robotic systems, such as robotic hands or finger joints, IMUs may be used to estimate joint position, dynamic motion, or dislocation events, especially in configurations where traditional encoders or contact-based sensors are impractical due to space constraints, flexibility requirements, or external disturbances.

IMUs may be implemented as miniaturized sensor modules, integrated into printed circuit boards, or embedded within structural elements of the robot, and they typically communicate with the control system via digital interfaces such as I²C, SPI, or UART.

The term "Phalanx" may be understood to refer to an individual segment or section of a finger in a robotic hand, analogous to the bones of a human or animal finger. A robotic finger typically comprises a sequence of two or more phalanges, connected in series via articulated joints that enable controlled bending, extension, or rotation. The phalanges may be designated according to their position along the finger, such as:
- Proximal phalanx: the segment closest to the base of the finger (i.e., connected to the palm or metacarpal structure);
- Intermediate phalanx: the middle segment, where present (absent in thumbs or simplified finger designs);
- Distal phalanx: the segment furthest from the base, typically forming the fingertip.

Each phalanx may be formed as a rigid or semi-rigid structure, fabricated from metal, plastic, or composite materials, and may be configured to house or interface with components such as actuation linkages, sensors, or tendon routing channels. The articulation between phalanges defines the degrees of freedom of the finger and enables complex movements for grasping, manipulation, or interaction with objects.

The term "Robotic hand" may be understood to refer to a mechanical appendage or end-effector that is operatively coupled to and controlled by a robotic system. A robotic hand is designed to interact with physical objects in the environment, typically by applying controlled motion and force for the purpose of manipulation. Such a device generally comprises one or more articulated fingers, grippers, or similar mechanical structures that can be independently or jointly actuated to perform a wide range of manual tasks, including but not limited to grasping, holding, lifting, rotating, repositioning, or otherwise manipulating objects of various shapes, sizes, and materials.

A robotic hand may be configured as a dexterous robotic hand, meaning that it exhibits a high degree of fine motor control and adaptability, enabling it to perform complex manipulation tasks that closely resemble those of a human hand. A dexterous robotic hand may comprise multiple degrees of freedom in each finger, tactile or force sensors for feedback control, and/or compliant actuation mechanisms to allow for adaptive gripping, precision handling, or in-hand object reorientation. The dexterity of the robotic hand may be particularly advantageous in applications requiring delicate operations, such as assembling small components, handling fragile items, or performing tasks in unstructured or unpredictable environments.

The term "Sensor means", in the context of joint position sensing, may be understood to refer to one or more components or systems configured to detect, measure, and/or estimate the angular and/or linear position of a joint within a robotic mechanism, such as a finger joint assembly of a robotic hand. The sensor means typically provides output signals indicative of the joint's current position, which may be used for control, feedback, and/or monitoring purposes.

Such sensor means may include, but is not limited to:
- Magnetic sensors, such as Hall-effect sensors, configured to detect the relative position or rotation of a magnetic element associated with a moving joint component.
- Rotary encoders, including optical or magnetic encoders, for detecting angular displacement with high resolution.
- Linear encoders, for measuring translational displacement in prismatic or screw-based joint mechanisms.
- Inertial sensors, such as Inertial Measurement Units (IMUs) or gyroscopes, for estimating joint motion or angular orientation based on dynamic sensing.
- Potentiometers, providing analog voltage signals proportional to the angular or linear displacement of a joint.
- Optical sensors, including interrupter-type or reflective sensors, configured to detect relative movement of a jointed component.
- Resistive or capacitive position sensors, embedded in flexible or articulated structures, for detecting deformation corresponding to joint movement.

Such sensor means may be integrated directly at the joint axis, mounted on a linkage connected to the joint, such as a phalanx, or positioned remotely with indirect coupling (e.g., via tendons or compliant structures), provided it enables the determination of joint position with sufficient accuracy and responsiveness for the intended robotic function.

The term "Tactile sensor" may be understood to refer to a sensor device configured to detect physical interaction with an object or surface, particularly through the measurement of parameters such as contact force, pressure, texture, or vibration. Tactile sensors can emulate a sense of touch in robotic systems and may provide feedback related to grasping, object handling, or environmental interaction.

A tactile sensor may operate based on various physical principles, including but not limited to:
- Resistive sensing, where contact pressure changes the electrical resistance of a material.
- Capacitive sensing, where deformation alters the capacitance between conductive layers.
- Piezoelectric sensing, where mechanical stress generates a voltage signal.
- Optical sensing, where contact modifies the light transmission or reflection within a flexible medium.
- Magnetic or Hall-effect-based sensing, where pressure affects the position of a magnetic element relative to a sensor.

In robotic hands or manipulators, tactile sensors may be integrated into the fingertips, inner gripping surfaces, or phalanges to provide real-time information about object contact, slip, or applied grip force. This enables closed-loop control, adaptive grasping, and safe interaction with delicate or irregular objects.

Tactile sensors may be implemented as discrete sensor arrays, continuous sensor films, or embedded sensor layers, and may include multiple sensing modalities to provide both spatial resolution and force sensitivity. The data from tactile sensors can be used alone or in combination with other sensors (e.g., position or inertial sensors) to enhance the dexterity and situational awareness of robotic systems.

Particular and preferred aspects of the present disclosure are set out in the accompanying independent and dependent claims. Features from the dependent claims may be combined with features of the independent claims and with features of other dependent claims as appropriate and not merely as explicitly set out in the claims.

The above and other characteristics, features and advantages of the present disclosure will become apparent from the following detailed description, taken in conjunction with the accompanying drawings, which illustrate, by way of example, the principles of the disclosure. This description is given for the sake of example only, without limiting the scope of the disclosure.

### BRIEF DESCRIPTION OF THE DRAWINGS

The present disclosure may be better understood by reference to the following drawings:
FIG. 1A illustrates a finger joint assembly in a default state in accordance with a first embodiment.
FIG. 1B illustrates the finger joint assembly of FIG. 1A in a dislocated state.
FIG. 2A illustrates a finger joint assembly in a default state in accordance with a second embodiment.
FIG. 2B illustrates the finger joint assembly of FIG. 2A in a dislocated state.
FIG. 3A illustrates a finger joint assembly in a default state in accordance with a third embodiment.
FIG. 3B illustrates the finger joint assembly of FIG. 3A in a dislocated state.
FIG. 4 illustrates a robotic hand in accordance with one embodiment.
FIG. 5 illustrates a correction mechanism in accordance with one embodiment.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

According to various embodiments of the present disclosure, advantageous finger joint assemblies for a robotic hand or other robotic manipulator are provided. The finger joint assemblies may use any type of mechanical joint that allows a movement around at least one rotation axis (such as a rolling contact joint, saddle joint, "half-pan" pin joint, "half-pan" spherical joint, etc.) and that is by design "dislocatable" in a way that somewhat would separate the two articulated bodies connected by the joint under external influence, deviating from the usual axis of rotation.

In certain embodiments, a joint position sensor which can measure the joint position angle in at least one intended rotation and/or movement axis is included, such as a magnetic (hall-effect) sensor, inertial measurement units (IMU), optical sensor, etc. The same sensor (or in other embodiments: an additional sensor) can also measure and detect if the joint moves outside of its intended rotation axis or movement plane or if the distance of the articulated bodies increases, meaning the joint is being dislocated.

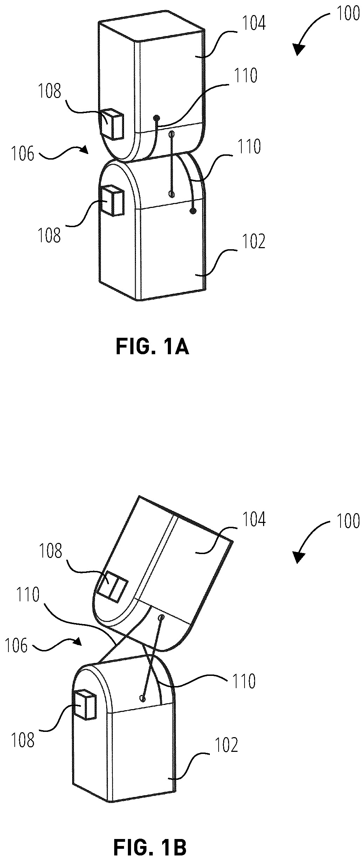

FIG. 1A and FIG. 1B illustrate a first embodiment of a finger joint assembly 100, which will now be described.

In FIG. 1A, the finger joint assembly 100 is in its default (engaged) position or state. The finger joint assembly 100 comprises a first phalanx 102 and a second phalanx 104 coupled in a way to form a joint 106. In the illustrated configuration, the finger joint assembly 100 is designed to allow a rotation, i.e., a movement of the first phalanx 102 and the second phalanx 104 relative to each other, along a predefines movement axis.

In FIG. 1B, the finger joint assembly 100 is in a dislocated position or state. In this example, the joint 106 has been bent along an axis that is not the intended, predefined movement axis.

In various embodiments, the finger joint assembly 100 comprises an elastic element 110 which holds the joint 106 in the default engaged position while allowing the desired rotation or movement. In the embodiment of FIG. 1A and FIG. 1B, the elastic element 110 is formed by two flexible ligament strings, each connecting one side of the first phalanx 102 with an opposite side of the second phalanx 104. The illustrated cross-over configuration of the ligament strings is only one variant. In other configurations, the ligament strings may run along the sides of the finger joint assembly.

In various embodiments, the finger joint assembly 100 comprises sensor means 108 configured to detect when the joint 106 is dislocated. How such dislocation detection is performed depends on the type of sensor. For instance, a 3D magnetic hall-effect sensor can detect different changes to the magnetic field when the magnet is not simply rotated on the joint axis but moves outside of the joint axis or increases its distance to the sensor. In the case of a magnetic hall-effect sensor, the sensor means 108 may be positioned on-axis or off-axis with respect to the magnet. IMUs placed on both articulating bodies would typically move on the same plane as the joint is rotated would exhibit an angular offset when the joint is being dislocated.

In various embodiments, the finger joint assembly 100 can be dislocated under external forces, such as caused by an impact with an object, a human, etc. As such, the dislocation sensing also allows to sense the robotic hand's contact with an object and to locate the articulated body affected. When a joint dislocation is measured, the robotic hand can then react, e.g. with motor control, release grasp, move in an opposite direction, or the like.

In various embodiments, only impacts or forces outside of the typical movement plane (e.g., lateral) cause joint dislocation, while impacts in the typical movement plane are compensated by the inherent back-drivability of the actuators. These impacts can be measured using the motor current or torque (in cases when a dedicated torque sensor on the joint is not possible). Combining dislocation sensing, measuring the contact with objects acting outside of the joint's movement plane, and measuring the torque applied in the direction of the movement plane, the sensor means produces comprehensive data on where an external force is applied to the robotic hand and even allows estimating the direction in which this external force is acting.

In various embodiments, the dislocatable finger joint assembly can be simplified (depending on the specific joint design), e.g., regarded as spring that holds the joint together and an effective tipping and/or contact point (depending on the direction of dislocation). The measured dislocation angle or, for example, distance between a sensor and a magnet on the other side of the joint, is therefore proportional to the applied external force and lever arm acting to dislocate the joint, given known system characteristics (spring constant of the joint). In certain embodiments, with this sensing method alone it is possible to derive the direction of action of a force and include reactive countermeasures in the controls, such as moving in the opposite direction to avoid a collision.

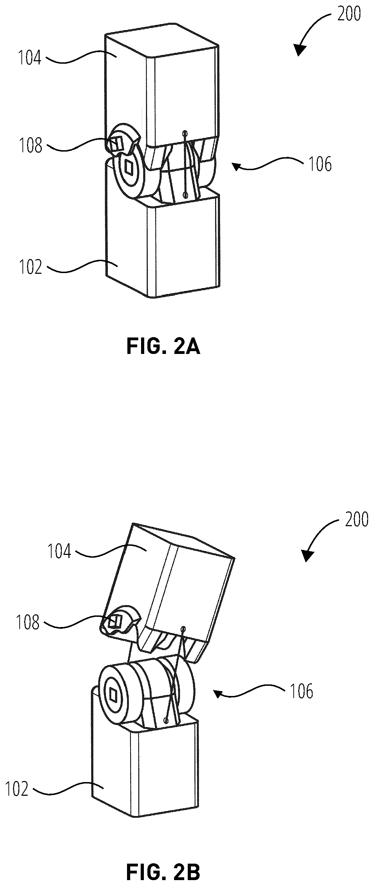

FIG. 2A illustrates a second embodiment of a finger joint assembly 200 in its default (engaged) position or state.

In FIG. 2B, the finger joint assembly 200 is in a dislocated position or state.

Elements of this second embodiment which are identical or similar to elements of the finger joint assembly 100 of the first embodiment are provided with like reference numerals.

In the embodiment of FIG. 2A and FIG. 2B, the correction mechanism comprises (is formed by) a form-fit calibration unit configured to align the first phalanx 102 and the second phalanx 104 relative to each other based on a form-fit when the joint 106 is returned in its default position. In the illustrated embodiment, the form-fit is obtained by way of the geometry of the engagement portions of the first phalanx 102 and the second phalanx 104.

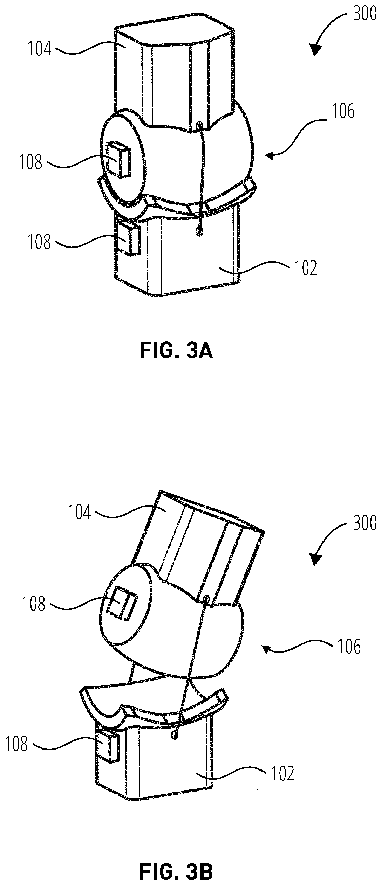

FIG. 3A illustrates a third embodiment of a finger joint assembly 300 in its default (engaged) position or state.

In FIG. 3B, the finger joint assembly 300 is in a dislocated position or state.

Elements of this third embodiment which are identical or similar to elements of the finger joint assemblies 100 or 200 of the first and second embodiment are provided with like reference numerals.

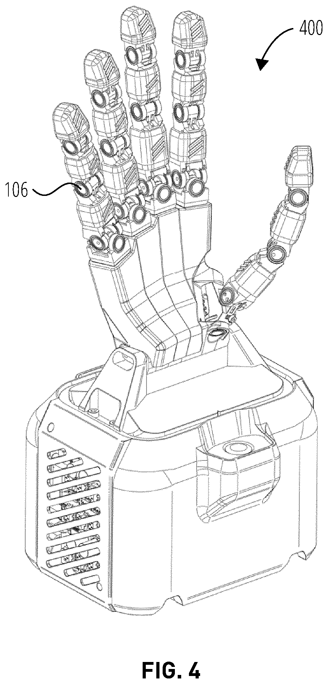

FIG. 4 illustrates a robotic hand in accordance with various embodiments. In the illustrated embodiment, the robotic hand 400 has a total of 19 joints 106, namely three joints 106 in the thumb and four joints 106 in each of the index finger, middle finger, ring finger, and pinky. The illustrated embodiment is merely for illustration, while the disclosed concepts can be applied to robotic hands or other robotic manipulators with any number of joints.

In various embodiments, any mix of finger joint assemblies 100, 200 and 300 described throughout this disclosure can be integrated into such a robotic hand 400.

In various embodiments, multiple sensor means and even multiple sensing modalities can be integrated, in which case sensor fusion can be applied to better and more accurately characterize external forces. For example, a simple tactile sensor (e.g., a force sensing resistor) can be used to approximate the location of an acting force, but cannot quantify it correctly as such a simple sensor may only measure normal forces at a specific point, omitting shear forces etc. Combining this information with the information from dislocation sensing and/or motor torque, the acting force can be much more precisely estimated, including its quantity, direction and/or location.

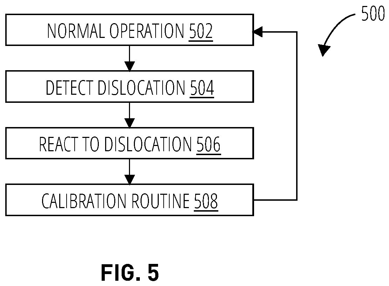

FIG. 5 illustrates a correction mechanism 500 in accordance with various embodiments. The process begins in step 502, when the robotic hand performs its normal operations, including moving its finger joint assemblies. A dislocation is detected in step 504. The robotic hand reacts to the detected dislocation in step 506. This reaction may include calculating the impact direction and/or torque based on the measured dislocation and/or other sensor modalities, controlling the affected joint and/or the position of the robotic hand for example to move in the opposite direction of impact or towards a previous state, releasing its grasp, or the like.

After the dislocation has been mitigated and the robotic hand can move freely again, the correction mechanism 500 may perform a calibration routine in step 508. Such a calibration routine may be based on the dislocation sensing to return the affected joint(s) back to their default engaged position(s). In one example implementation, the calibration routine moves the one or more joints to a mechanical end-stop which also aligns the articulating bodies on their default rotation axis. Such calibration routine can include various movements to end-stops at both ends of the joint's range of motion or other defined positions. In addition to aligning the articulating bodies mechanically, the calibration positions may be used to reference known joint positions (e.g., a mechanical end stop as "0°" position) to calibrate the translation of the sensor signal into the calculated joint position angle (adjusting offset or scaling).

When the dislocation sensing measurements indicate that the joint has been returned to its default engaged position, the robotic hand can then resume its tasks by returning to step 502, as it reliably knows all joints and bodies are where they are supposed to be.

Alternatively, a calibration position can also be reached by manually applying an external device that constraints all fingers of the robotic hand in a defined calibration position. Alternatively, one finger (e.g., the thumb) may be used to realign other fingers, such as by pushing against their dislocated joints, snapping them back into place.

While various aspects and embodiments have been illustrated and described in detail in the foregoing description and the drawings, such illustration and description is illustrative or exemplary and not restrictive. Variations to the disclosed embodiments can be understood and effected by those skilled in the art in practicing the claimed subject-matter, from a study of the drawings, the disclosure, and the appended claims.

Although some aspects have been described in the context of a product, apparatus, device or system, these aspects also represent a description of the corresponding process, method or use, where a block or component corresponds to a method step or a feature of a method step. Analogously, aspects described in the context of a method step also represent a description of a corresponding block or component or feature of a corresponding product, apparatus, device or system.

The order of execution of the operations in the described embodiments is not essential, unless otherwise specified. That is, the operations may be performed in any order, unless otherwise specified, and embodiments may include additional or fewer operations than those mentioned.

In the claims, the word "comprising" does not exclude other elements or steps, and the indefinite article "a" or "an" does not exclude a plurality. A single entity may fulfill the functions of several entities recited in the claims. The mere fact that certain measures are recited in mutually different dependent claims does not indicate that a combination of these measures cannot be used to advantage. Any reference signs in the claims should not be construed as limiting the scope.

### REFERENCE SIGNS

100 finger joint assembly
102 first phalanx
104 second phalanx
106 joint
108 sensor means
110 elastic element
200 finger joint assembly
300 finger joint assembly
400 robotic hand
500 correction mechanism
502 step
504 step
506 step
508 step

## Claims

1. A finger joint assembly (100, 200, 300) for a robotic hand (400), comprising:
a first phalanx (102) and a second phalanx (104) coupled by a dislocatable joint (106); and
sensor means (108) configured to determine a position of the joint (106) and to detect when the joint (106) is dislocated.

2. The finger joint assembly of claim 1, wherein the sensor means comprises at least one hall effect sensor configured to detect changes in a magnetic field when the joint is dislocated.

3. The finger joint assembly of claim 2, wherein the at least one hall effect sensor is positioned on-axis or off-axis with respect to a magnet attached to the joint; and/or
wherein the hall effect sensor is attached to the first phalanx and/or second phalanx.

4. The finger joint assembly of any one of claims 1 to 3, wherein the sensor means comprises at least one inertial measurement unit configured to detect angular offsets indicating joint dislocation;
wherein, optionally, a first inertial measurement unit is placed on the first phalanx and a second inertial measurement unit is placed on the second phalanx of the joint to detect movement outside an intended rotation axis.

5. The finger joint assembly of any one of claims 1 to 4, wherein the sensor means is configured to measure a torque acting about an axis corresponding to at least one movement plane of the joint;
wherein, optionally, an estimated engagement point and an estimated direction of external forces is determined at least based on the measured torque or based on a different sensor measurement.

6. The finger joint assembly of any one of claims 1 to 5, wherein the sensor means comprises at least one tactile sensor configured to approximate an engagement point of an acting force;
wherein, optionally, the tactile sensor is a force sensing resistor configured to measure normal forces at specific points of the joint and/or the first phalanx and/or the second phalanx.

7. The finger joint assembly of any one of claims 1 to 6, wherein the dislocatable joint allows movement around at least one rotation axis and is dislocatable when moved around one or more other axis and/or is dislocatable when moved in one or more linear directions.

8. The finger joint assembly of any one of claims 1 to 7, wherein the dislocatable joint comprises at least one elastic element (110) configured to maintain the joint in a default engaged position;
wherein, optionally, the at least one elastic element includes one or more of:
- flexible ligament string;
- rubber structure;
- spring.

9. The finger joint assembly of any one of claims 1 to 8, comprising a correction mechanism configured to return the joint to its default position upon the joint being dislocated.

10. The finger joint assembly of claim 9, wherein the correction mechanism comprises a form-fit calibration unit configured to align the first phalanx and the second phalanx relative to each other based on a form-fit when the joint is returned in its default position,
wherein, optionally, the form-fit calibration unit includes a first part provided on the first phalanx and a second part provided at the second phalanx such that the first part and second part at least partially build a form-fit.

11. The finger joint assembly of claim 9 or 10, wherein the correction mechanism comprises a motor control system configured to adjust the position of the joint based on sensor data including at least sensor data obtained by the sensor means.

12. The finger joint assembly of any one of claims 9 to 11, wherein the correction mechanism includes the elastic element of claim 8.

13. A system comprising:
a finger joint assembly (100, 200, 300) according to any one of claims 1 to 12; and
a data processing device configured to receive sensor data obtained by the sensor means.

14. The system of claim 13, wherein the sensor means includes a plurality of sensors, wherein the data processing device is configured to perform sensor fusion for enhancing the precision of detecting a dislocation of the joint;
wherein, optionally, sensor fusion includes combining and preferably cross-validating sensor data obtained from the plurality of sensors.

15. A robotic hand (400) comprising at least one, preferably a plurality of, finger joint assemblies (100, 200, 300) according any one of claims 1 to 12.
